# EUROPÄISCHE PATENTANMELDUNG

(11) **EP 1 045 157 A1**
(43) Veröffentlichungstag der Anmeldung: **18.10.2000**
(21) Anmeldenummer: 00104861.0
(22) Anmeldetag: 07.03.2000
(51) Int. Cl.: F16C 19/52

(54) **Wälzlager zur Lagerung von beheizten Walzen**

(30) Priorität: 10.03.1999 DE 19910579
(71) Anmelder: FAG OEM und Handel AG, 97421 Schweinfurt (DE)
(72) Erfinder: Müller, Karl, 97508 Grettstadt (DE); Martin, Gudrun, 97502 Euerbach (DE)

(57) **Zusammenfassung**

Wälzlager 10 für einen Wellenzapfen 1 einer beheizten Walze oder eines Kalanders, wobei der Außendurchmesser des Wellenzapfens gegenüber der mit Wärmeträgermedium durchströmten Welle wärmeisoliert ist und die Bohrung 40 und / oder die Seitenflächen 41 des Innenrings 11 des Wälzlagers 10 mit einer Keramikschicht versehen sind, um den Wärmeübergang von dem Wellenzapfen 1 ins Wälzlager 10 zu reduzieren.

## Beschreibung

### Gebiet der Erfindung

Die Erfindung betrifft ein Wälzlager nach dem Oberbegriff des Anspruches 1.

### Hintergrund der Erfindung

Wälzlager in beheizten Walzen oder Kalandern (z. B. zur Papier-, Kunststoff-, Textil-, Holzherstellung ...) sind hohen thermischen Belastungen ausgesetzt, da die Welle permanent mit einem Wärmeträgermedium wie z. B. Heißdampf oder heißem Öl zum Trocknen der Endlosbahnen durchströmt wird. Der Innenring der Wälzlager ist demzufolge im Betrieb immer wärmer als der Außenring, der im Gehäuse sitzt. Um den Wärmefluß von dem Weltenzapfen auf den Innenring zu reduzieren, wurden schon die unterschiedlichsten Isolationsmaßnahmen unternommen.

In der SKF Kugellager Zeitschrift (Nummer 233, Dd 7391 88-12 Reg. 07771 Seite 2 ff; Nummer 238, Dd 7531 91-12 Reg. 07771 Seite 25 ff; Nummer 239, Dd 7617 92-05 Reg. 07771, Seite 24 ff) und im SKF Handbuch 4200T Lagerung für Papiermaschinen, Reg 861 2 3000 1993-02 Seite 56 ff werden die Probleme dieser Lagerstelle ausführlich beschrieben. Besonders wird dabei auf die Notwendigkeit der Isolation im Wellenzapfen hingewiesen. Diese Schriften belegen eine jahrelange intensive Beschäftigung mit dieser Lagerstelle. Zusätzliche Isolationen zwischen dem Wälzlager und dem Wellenzapfen werden dabei nicht beschrieben.

In der DE 44 28 419 A1 wird zwischen Wellenzapfen und Wälzlagerinnenring ein Klemmverband zur Isolation und zum Temperaturausgleich des Lagers vorgesehen. Dieser Klemmverband wird durch eine Schubvorrichtung axial mit einer Kraft beaufschlagt. Der Nachteil dieser Lösung besteht darin, daß diese Lösung sehr aufwendig ist und ohne ein Nacharbeiten des Wellenzapfens nachträglich nicht eingebaut werden kann.

### Aufgabe der Erfindung

Es besteht daher die Aufgabe ein Wälzlager für einen beheizten Wellenzapfen vorzusehen, das einerseits thermisch besser isoliert ist und andererseits ohne zusätzliche Umbauten im Umfeld der Lagerstelle montiert werden kann.

### Zusammenfassung der Erfindung

Erfindungsgemäß wird diese Aufgabe durch die kennzeichnenden Merkmale des Anspruches 1 gelöst. Die Ansprüche 2 bis 8 beschreiben bevorzugte Ausführungsvarianten.

Für die Wälzlager ergeben sich durch die erfindungsgemäße Keramikbeschichtung des Innenrings folgende Vorteile:
- Das gesamte Wälzlager hat eine geringere Lagertemperatur.
- Die Differenz zwischen der Betriebstemperatur des Innenrings und der des Außenrings wird reduziert und damit auch die Problematik der Lagerluft des Wälzlagers bei den unterschiedlichen Betriebszuständen.
- Es ergibt sich weniger Mischreibung im Wälzlager und damit eine längere Lebensdauer für das Wälzlager.
- Die Standzeit des eingesetzten Schmieröles steigt, und der Volumenstrom des Schmieröles durch das Wälzlager kann reduziert werden.

Ein weiterer Vorteil der beschichteten Wälzlager besteht darin, daß diese Wälzlager ohne Änderungen der Umgebungsteile eingesetzt werden können.

Dies ist besonders wichtig, um bei bestehenden Anlagen ohne zusätzliche Aufwendungen diese neuen, beschichteten Wälzlager einsetzen zu können.

Im Anspruch 2 und 3 wird die Zusammensetzung der keramischen Schicht näher beschrieben. Die Keramikschicht enthält mindestens 90% Zirkoniumoxyd ZrO₂, der Rest besteht überwiegend aus Yttriumoxid Y₂O₃. Die Haftschicht, die zwischen dem Innenring und der Keramikschicht aufgetragen ist, besteht aus Chrom und Nickel. Ein Beispiel für die Zusammensetzung der Beschichtung ist 1/10 mm Haftschicht und 9/10 mm Keramikschicht.

Gemäß Anspruch 4 muß bei der Produktion der Innenringe die Beschichtungsdicke in der Maßgestaltung berücksichtigt werden, damit die Wälzlager nach dem Beschichten ihre genormten Außenmaße haben, um die beschichteten Wälzlager problemlos an Stellen einsetzen zu können, an denen bisher unbeschichtet Wälzlager eingesetzt wurden.

Gemäß Anspruch 5 mit den Unteransprüchen 6 - 8 werden die Innen- und / oder Außendurchmesser sowie stirnseitige Kontaktflächen der Abzieh-, Spann- und Keilhülsen mit einer Keramikschicht versehen. Bei Wälzlagern, die mit Abziehhülsen oder Spannhülsen auf einer Welle montiert sind, erhöht sich so der Isolationseffekt deutlich, da mehrere Flächen zwischen Wellenzapfen und Wälzlagerinnenring beschichtet sind. Der Wärmefluß, der in das Wälzlager über den Innenring eingebracht wird, wird so noch weiter reduziert.

### Kurze Beschreibung der Zeichnung

Die Erfindung wird an zwei beispielhaften Zeichnungen näher erläutert.
Figur 1 zeigt die Anordnung eines Wälzlagers mit beschichteter konischer Bohrung sowie beschichteter Seitenfläche in einem Trockenzylinder.
Figur 2 zeigt die Anordnung eines Wälzlagers, das mit einer beschichteten Abziehhülse montiert worden ist, in einem Trockenzylinder.

### Detaillierte Beschreibung der Zeichnung

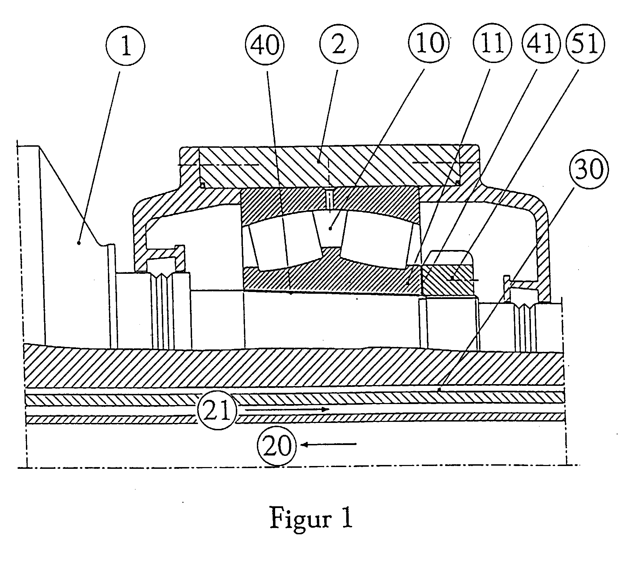

In der Figur 1 ist das Wälzlager **10** zwischen Wellenzapfen **1** und Gehäuse **2** eingebaut. Zur axialen Sicherung ist die Wellenmutter **51** vorgesehen. Im Wellenzapfen **1** sind die beiden Kanäle für den Eintritt des Wärmeträgermediums **20** und der Rücklauf **21** gezeigt. Außerhalb des Rücklaufes **21** ist der Isolationsbereich **30** als Ringkanal angeordnet. Der Innenring **11** des Wälzlagers **10** ist in der Bohrung mit einer Keramikschicht **40** und an der Seitenfläche, an der der Innenring **11** an der Wellenmutter **51** anliegt, mit einer Keramikschicht **41** überzogen.

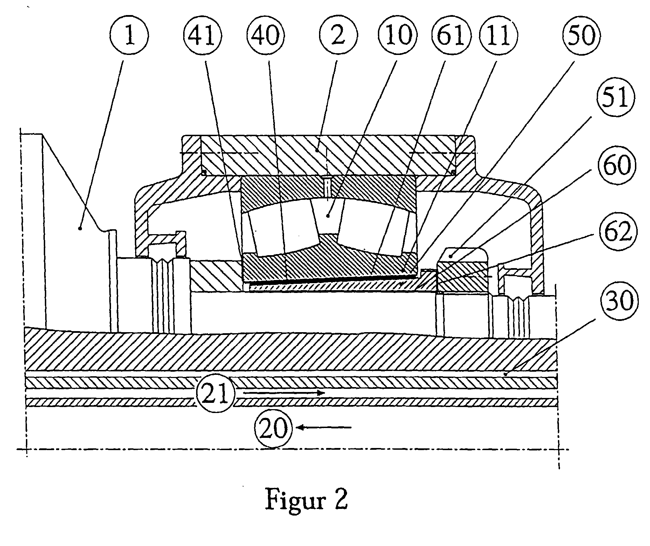

In Figur 2 wird weitgehend der gleiche Sachverhalt wie in Figur 1 gezeigt, wobei in diesem Beispiel das Wälzlager **11** über eine Abziehhülse **50** auf dem Wellenzapfen **1** befestigt ist. Zur axialen Sicherung der Abziehhülse **50** ist diese mit der Wellenmutter **51** gesichert. Die Keramikschichten sind an der Abziehhülse **50**, an der Innenfläche **60**, an der Außenfläche **61** und an der axialen Anlagefläche **62** zu der Wellenmutter **51** hin angeordnet. In diesem Beispiel ist zusätzlich der Innenring **11** in der Bohrung **40** und der Seitenfläche **41** beschichtet.

### Bezugszeichenliste

- 1: Wellenzapfen
- 2: Aufnehmendes Gehäuse
- 10: Wälzlager
- 11: Innenring des Wälzlagers
- 20: Wärmeträgermedium Eintritt
- 21: Wärmeträgermedium Rücklauf
- 30: Isolation im Wellenzapfen
- 40: Keramikschicht in der Bohrung des Innenringes
- 41: Keramikschicht an der Seitenfläche des Innenringes
- 50: Abziehhülse
- 51: Wellenmutter
- 60: Keramikschicht im Innendurchmesser der Abziehhülse
- 61: Keramikschicht im Außendurchmesser der Abziehhülse
- 62: Keramikschicht an der stirnseitigen Anlagefläche der Abziehhülse

## Patentansprüche

1. Wälzlager (**10**) für einen Wellenzapfen (**1**) einer beheizten Walze oder eines Kalanders, wobei der Außendurchmesser des Wellenzapfens gegenüber der mit Wärmeträgermedium durchströmten Welle wärmeisoliert ist, **dadurch gekennzeichnet**, daß die Bohrung (**40**) und / oder die Seitenflächen (**41**) des Innenrings (**11**) des Wälzlagers (**10**) mit einer Keramikschicht versehen sind, um den Wärmeübergang von dem Wellenzapfen (**1**) ins Wälzlager (**10**) zu reduzieren.

2. Wälzlager nach Anspruch 1, **dadurch gekennzeichnet**, daß die Keramikschicht aus mindestens 90% Zirkoniumoxyd ZrO₂ besteht und mit einer dünnen Haftschicht aus Nickel / Chrom auf dem Wälzlagerring aufgebracht wird.

3. Wälzlager nach Anspruch 2, **dadurch gekennzeichnet**, daß der Rest der Keramikschicht überwiegend aus Yttriumoxid Y₂O₃ besteht.

4. Wälzlager nach Anspruch 1, 2 und 3, **dadurch gekennzeichnet**, daß der beschichtete Innenring die genormten Außenmaße der Wälzlagerbaureihen besitzt.

5. Abziehhülsen, Spannhülsen und Keilhülsen von Wälzlagern im Einsatz in einer beheizten Walze oder eines Kalanders, wobei der Außendurchmesser des Wellenzapfens (**1**) gegenüber der mit Wärmeträgermedium durchströmten Welle wärmeisoliert ist, **dadurch gekennzeichnet**, daß der Innendurchmesser (**60**) und /oder Außendurchmesser (**61**) und / oder stirnseitige Anlageflächen (**62**) dieser Abziehhülsen (**50**), Spannhülsen und Keilhülsen mit einer Keramikschicht versehen ist.

6. Abziehhülsen, Spannhülsen und Keilhülsen von Wälzlagern nach Anspruch 5, **dadurch gekennzeichnet**, daß die Keramikschicht aus mindestens 90% Zirkoniumoxyd ZrO₂ besteht und mit einer dünnen Haftschicht aus Nickel / Chrom auf der Abziehhülse oder Spannhülse aufgebracht wird.

7. Abziehhülsen, Spannhülsen und Keilhülsen von Wälzlagern nach Anspruch 6, **dadurch gekennzeichnet**, daß der Rest der Keramikschicht aus überwiegend Yttriumoxid Y₂O₃ besteht.

8. Abziehhülsen und Spannhülsen von Wälzlagern nach Anspruch 5, 6 und 7, **dadurch gekennzeichnet**, daß die beschichteten Abziehhülsen (**50**) und Spannhülsen die genormten Außenmaße des Wälzlagerzubehörs besitzen.
